# EUROPEAN PATENT SPECIFICATION

(11) **EP 2 602 043 B1**
(45) Date of publication and mention of the grant of the patent: **20.04.2016**
(21) Application number: 12187219.6
(22) Date of filing: 04.10.2012
(51) Int. Cl.: B23H 1/04, F01D 11/00, B23H 9/10

(54) **Honeycomb seal for abradable angel wing**
Wabendichtung für einen Knickflügel
Joint de nid d'abeilles pour aile d'ange abradable

(30) Priority: 06.12.2011 US 201113312109
(43) Date of publication of application: 12.06.2013
(73) Proprietor: General Electric Company, Schenectady, NY 12345 (US)
(72) Inventor: Lacy, Benjamin Paul, Greer, SC South Carolina 29650 (US); Chupp, Raymond, Greenville, SC South Carolina 29615 (US); Sheng, Nuo, Niskayuna, NY New York 12309 (US)
(74) Representative: Lee, Brenda

(56) References cited:
- EP-A1- 2 174 740
- EP-A2- 1 146 204
- EP-A2- 1 985 808
- DE-A1-102005 002 270
- DE-A1-102010 054 113
- US-A1- 2004 239 040

## Description

The present invention relates to turbines, and more particularly, to a method of fabricating an abradable honeycomb as an integral part of a nozzle sealing flange which is engaged by an angel wing of a rotating bucket in a gas turbine to limit cooling air from leaking into the gas turbine's high temperature combustion gas passage.

### BACKGROUND OF THE INVENTION

A gas turbine is a rotary engine that extracts energy from the flow of combustion gas through the turbine. It has an upstream air intake or inlet, a compressor coupled to a combustor, a downstream turbine that receives combustion gas from the combustor, and a gas outlet or exhaust nozzle.

The compressor and turbine sections include at least one circumferential row of rotating rotor blades or buckets. The free ends or tips of the buckets are surrounded by a stator casing. The base portions of the rotor blades are flanked by the inner shrouds of stator blades or nozzles located upstream and downstream of the rotating buckets.

Seal assemblies are typically used to prevent or limit cooling air from leaking into a gas turbine's high temperature combustion gas passage from between moving buckets and stationary nozzles. These seal assemblies typically include seal plates, referred to as "angel wings", which extend axially from the upstream and downstream surfaces of the shank portions of the moving buckets, and which terminate in radially outwardly extending tips or teeth. The seal assemblies also include sealing structures or flanges projecting axially from upstream and downstream from stationary nozzle assemblies to define seals with the angel wings of the moving bucket shanks. However, the sealing performance of these seal assemblies is not always good, such that more than a desired amount of the cooling air tends to leak into the high temperature combustion gas passage so that the amount of cooling air is increased, causing deterioration in the performance of the gas turbine.

The efficiency of the turbine depends, in part, on the radial clearance or gap between the angel wings and the adjacent sealing structures. If the clearance is too small, the angel wings will strike the adjacent sealing structures during certain turbine operating conditions. If the clearance is too large, excessive valuable cooling air will leak from the rotor wheelspace into the hot gas path, decreasing the turbine's efficiency.

An abradable seal can be used to improve turbine performance by physically reducing the clearance between the sealing flange of a nozzle and an opposed angel wing seal plate of a bucket. An abradable seal material is sometimes located on the radially inner surface of the seal of the stationary nozzle, so as to be located within the annular gap between the inner surface of the nozzle seal and the end tips of the angel wing of the rotating bucket.

One type of sealing material that is used in sealing assemblies is an abradable honeycomb. While an abradable honeycomb has the ability to significantly reduce the leakage of cooling air into the high temperature combustion gas passage, the secure attachment of traditionally made abradable honeycomb pieces at a bucket/nozzle interface is difficult to ensure.

Angel wing abradable seals using honeycomb on the nozzle have been shown to provide significant sealing improvement. However, attaching a honeycomb piece reliably to an angel wing is difficult, since brazing thin pieces of metal ribbon means a very small attachment region. Currently, the honeycomb is sometimes brazed directly to a part with the hope that it will stay on. One alternative to this is to braze the honeycomb to a plate and then braze or weld the plate onto the angel wing. EP 2174740 describes a honeycomb seal for separating a rotating part from a stator part of a gas turbine engine, the seal comprising a substrate and honeycomb cells, wherein the substrate is in one part with the honeycomb cells and the honeycomb cells having been formed out of the substrate utilizing EDM machining.

### BRIEF DESCRIPTION OF THE INVENTION

The present invention uses sinker electrical discharge machining ("EDM") to plunge/burn a honeycomb directly into a turbine nozzle sealing flange so it becomes an integral part of the nozzle sealing flange so that when a turbine bucket angel wing in the turbine's sealing assembly rubs the nozzle sealing flange, there is improved sealing between the nozzle sealing flange and the bucket angel wing with less risk of honeycomb failure. Optionally, the honeycomb resulting from the electrode with the sinker electrical discharge machining device being plunged into the block of material can be coated with a coating suitable for corrosion resistance and/or improved abradability. In addition, the block of material in which the honeycomb is formed can be either an integral part of the turbine nozzle or separate from the turbine nozzle. In the latter case, the block of material is welded or brazed to the turbine nozzle after the honeycomb has been formed in such block.

The invention resides in a method of making a turbine nozzle sealing flange with a plurality of abradable cavities formed in the sealing flange as defined in the appended claims.

### BRIEF DESCRIPTION OF THE DRAWINGS

Embodiments of the present invention will now be described, by way of example only, with reference to the accompanying drawings in which:
FIG. 1 illustrates the concept of attaching a abradable honeycomb seal to an angel wing to seal the path into a turbine hot gas path from the wheelspace.
FIGs. 2A and 2B are perspective views of two embodiments of an abradable angel wing seal in which is directly formed the abradable honeycomb so as to be an integral part of the angel wing seal.
FIG. 3 is an enlarged perspective view of a portion of the abradable honeycomb formed in an angel wing seal according to the present invention.
FIG. 4 is a sketch depicting the multiple layers resulting from the honeycomb being coated with a material for corrosion resistance/improved abradability.
FIG. 5 is an enlarged perspective view of a sketch depicting the preferable diamond shape of each of the hexagonal cells comprising the abradable honeycomb formed in an angel wing seal according to the present invention.
FIG. 6 is a simplified sketch of a Sinker EDM (Electrical Discharge Machining) machine used in the process of making the honeycomb impression formed in an angel wing seal according to the present invention.
FIG. 7 is an enlarged perspective view of an electrode used in the Sinker EDM machine to make the honeycomb impression formed in an angel wing seal according to the present invention.

### DETAILED DESCRIPTION OF THE INVENTION

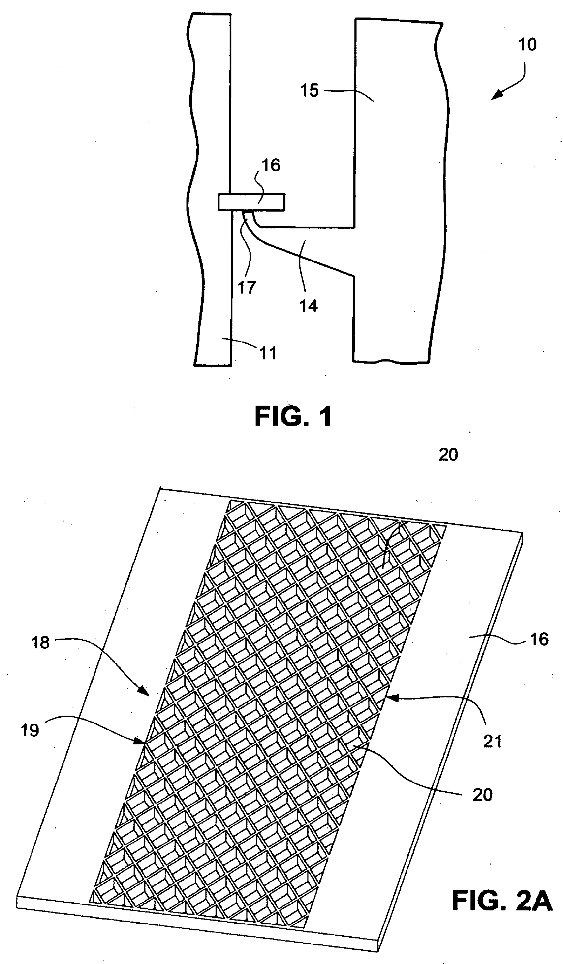

FIG. 1 is a simple cross-sectional view showing a part of a seal assembly 10 for limiting cooling air from leaking from between a moving bucket 15 and a stationary nozzle 11 of a gas turbine (not shown) into the high temperature combustion gas passage of the turbine. The turbine has a rotor (not shown) rotating about a center longitudinal axis and a plurality of buckets 15 mounted on the outer surface of the rotor. The buckets are spaced from one another circumferentially around the rotor. The buckets 15 also extend radially outward from the rotor. A stationary outer casing (not shown) surrounding and spaced radially outwardly from the buckets defines the high temperature gas passage through the turbine.

Seal plates, typically referred to as "angel wings" 14, extend axially from the upstream and downstream surfaces of the shank portions of the rotating buckets 15. Each of the angel wings 14 ends in a radially outwardly extending tip or cutter tooth 17. Sealing structures or flanges 16 project axially from upstream and downstream stationary nozzle assemblies 11 for defining seals with the angel wings 14 of the rotating buckets 15. The seal assemblies 12 and 14 are intended to limit the amount of cooling air from leaking into the high temperature combustion gas passage.

FIG. 1 illustrates the concept of a sealing flange 16 with an abradable honeycomb being attached to a nozzle 11 and engaged by a cutter tooth 17 on an angel wing 14 to thereby seal the path into the hot gas path. The seal between the honeycomb in sealing flange 16 and the cutter tooth 17 on the angel wing 14 reduces leakage. However, because the location of sealing flange 16 is a high g force and a high temperature location and variances can result in varying amounts of rub, ensuring reliable attachment of traditional thin honeycomb foil to plate 16 is difficult.

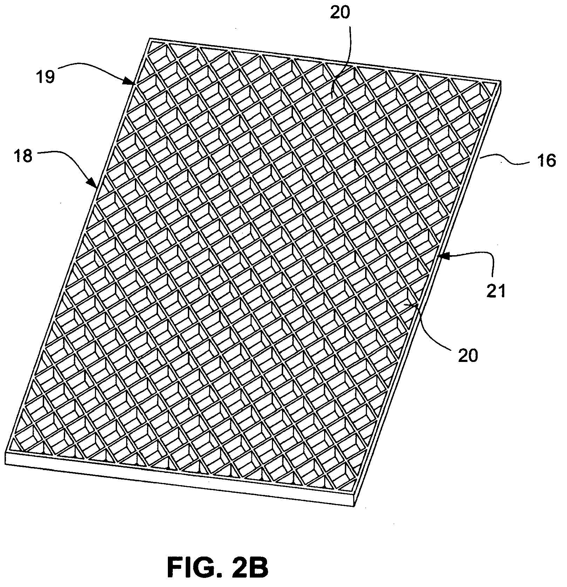

FIGs. 2A and 2B are perspective views of sealing flange 16 with a abradable honeycomb 18 directly plunged into the nozzle sealing flange itself, so that the honeycomb 18 is an integral part of the nozzle sealing flange. The honeycomb 18 being an integral part of the sealing flange 16 is advantageous because this construction allows for faster and better repairs of worn out abradable honeycomb seals. The honeycomb 18 can be integrally formed in a sealing flange that is integral to the angel wing 14 or in a new or replacement sealing flange 16 that is separate from the angel wing 14. Where the sealing flange 16 with the integrally formed honeycomb 18 is separate from the angel wing 14, it can then be welded, brazed or attached mechanically to the angel wing 14. The honeycomb 18 can extend to all sides of the nozzle sealing flange or to only some (e.g., two) of the sides of the nozzle sealing flange, as shown in Figures 2A and 2B.

After the honeycomb 18 has been formed, it can optionally be coated with a coating suitable for oxidation and corrosion resistance and/or improved abradability. An example of such a coating would be an aluminide intermetallic coating.

It should be noted that although FIG. 2 preferably shows a honeycomb 18 with a plurality of cells 20 formed in the nozzle sealing flange 16, other abradable patterns, which include a plurality of cavities interconnected by a plurality of side walls, could be formed in the sealing flange 16. These cavities could be similar to, or different from, the cells 20 of honeycomb 18, for example, in shape and/or construction.

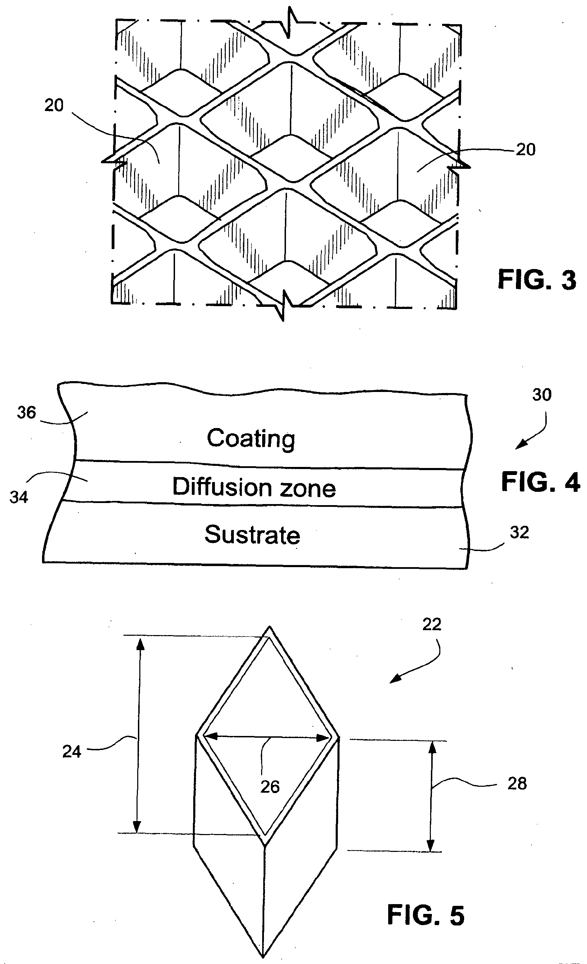

FIG. 3 is an enlarged perspective view of a portion of the abradable honeycomb 18 formed in sealing flange 16 according to the present invention. FIG. 4 depicts a portion 30 of a single honeycomb cell 20 that has been coated with a coating 36 possibly for corrosion resistance and/or improved abradability, such that the result is the substrate material 32 from which the sealing flange 16, and thus the honeycomb 18 is formed, has a diffusion zone 34 between itself and the coating 36. One example of a substrate material is inconel. "Inconel" is a registered trademark for a family of austentic nickel-chromium-based superalloys that are typically used in high temperature applications.

As can be seen from FIG. 3, preferably, each of the individual cells 20 forming the honeycomb 18 are diamond shaped hexagons, although it should be noted that other suitable geometric shapes could be used. FIG. 5 is an enlarged perspective view of a sketch depicting the preferable diamond shape of each of the hexagonal cells 20 comprising the abradable honeycomb 18 formed in sealing flange 16. The dimensions of the cells 20 can be of any size and any wall thickness. Preferably, the goal dimensions for the diamond shaped cells 20 are a length of between 0.05 and 0.2 inches, a width of between 0.05 and 0.1 inches, a depth of about 0.1 to 0.6 inches, and a wall thickness of about 0.004 to 0.015 inches.

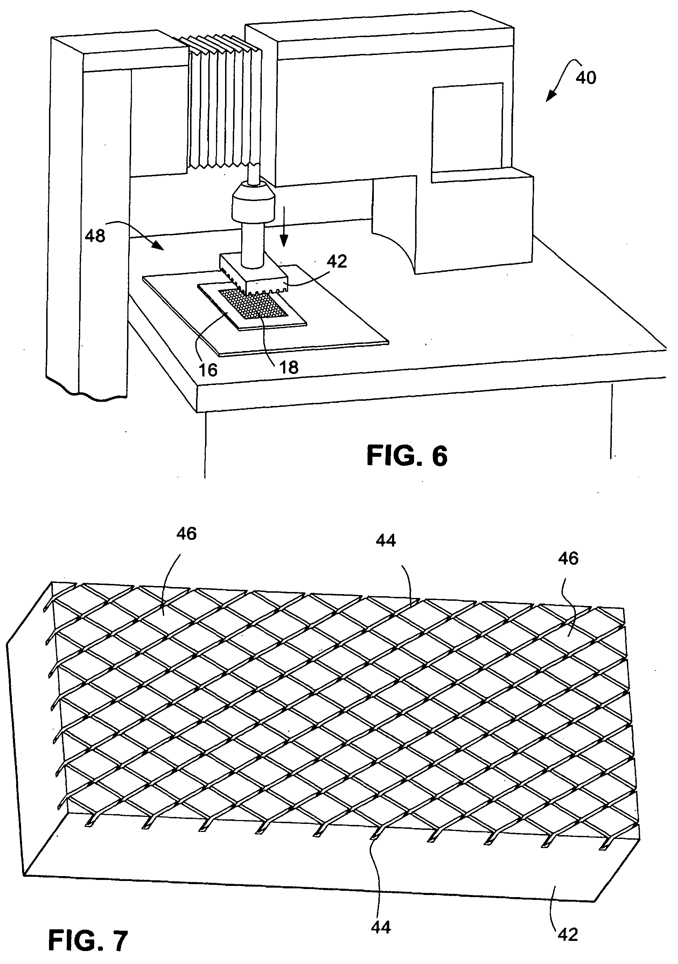

FIG. 6 is a simplified sketch of a Sinker EDM (Electrical Discharge Machining) machine 40 used in the process of making a honeycomb impression 18 integrally formed in sealing flange 16 according to the present invention. FIG. 7 is an enlarged perspective view of an electrode 42 used in the Sinker EDM machine 40 to press the honeycomb impression 18 in a sealing flange 16 according to the present invention. The electrode 42 includes a series of crisscrossing "negative" grooves 44 in it which form a "positive" diamond shaped pattern that is used to press the diamond shaped honeycomb 18 in a sealing flange 16. The Sinker EDM machine 40 then includes a press assembly on which the electrode 42 is mounted to press the honeycomb 18 directly into the sealing flange 16, as shown in FIG. 6. Using the Sinker EDM machine 40 to directly sink the diamond honeycomb 18 into the sealing flange 16 allows the honeycomb to become an integral part of the sealing flange 16. In this regard, casting for sealing flange 16 could be thickened to allow pressing the honeycomb 18 directly into the flange at any desired location, after which a coating can be added. For repair, or as an alternative for new construction, an entire sealing flange 16 can have the honeycomb 18 sunken into it, which can then be welded, brazed, or mechanically attached to the nozzle 11.

Thus, FIG. 6 shows the process for making a sealing flange 16 with an integral honeycomb 18 of appropriate dimensions and size. A sinker electrode 42, like that shown in FIG. 7, is first formed and then plunged into the sealing flange the honeycomb is to go into. One possibility would be a block of inconel to be used as the sealing flange 16. Diamond or square shapes are easiest to make though with more complex machining of an electrode like electrode 42, more complex shapes can be made. Dimensions can easily be varied.

Sinker EDM (Electrical Discharge Machining) is a process that lends itself to precision machining of features when conventional machining is inappropriate. For instance, complex features, small precise features and tight tolerance features are all examples of operations well suited for sinker EDM, in which a "positive" shaped electrode can be machined and then "sunk" (burned) into a desired part. With EDM, no pressure is applied to the material being machined, as the features are burned to their shape, rather than abraded. A more complicated electrode shape than the diamond shaped honeycomb of the electrode 42 shown in FIG. 7 could do either a more complicated honeycomb pattern or other, more complicated patterns.

According to the invention, a thicker sidewall along the leading edge 19 and/or the trailing edges 21 (where no rub occurs) is retained to improve strength. Additional embodiments could include the formation of varied shapes and sizes. The EDM technology enables having certain walls thicker in one axis or location than another, which could allow improved sealing, while not impacting abradability (thicker in the flow direction, than in the rub direction, for example). The EDM technology can also enable angling of the honeycomb in a preferred direction, again to improve sealing. The thickness of honeycomb could be varied in one direction versus another preferential direction. The sunken shape, such as a honeycomb, could also have another non-normal orientation that could not easily be made any other way.

The use sinker electrical discharge machining ("EDM") to directly plunge the honeycomb 18 into the nozzle sealing flange 16 itself, so that the honeycomb becomes an integral part of the nozzle sealing flange, enables the abradable angel wing seal by providing a reliable method for putting honeycomb on a nozzle sealing flange. It also results in a sealing flange that provides improved sealing between the angel wing and the sealing flange.

The use of the sinker electrical discharge machining enables a new sealing technology may have applications in other turbine locations, as well in other areas of application.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A method of making a turbine nozzle (11) sealing flange (16) with a plurality of abradable cavities (20) interconnected by a plurality of sidewalls formed in the sealing flange, the method comprising the steps of:
providing a block of material suitable (18) for serving as a nozzle sealing flange (16),
providing a sinker electrical discharge machining device (40) for machining features into the block of material (18),
providing an electrode (42) for use with the sinker electrical discharge machining device (40) to perform the machining of the features in the block (18) of material, the electrode (42) being shaped to form in the block of material (18) the plurality of interconnected cavities,
using the electrode (42) with the sinker electrical discharge machining device (40) to plunge the electrode (42) directly into the block of material (18), to thereby form the nozzle sealing flange (16) with the plurality of interconnected cavities; **characterised in that** the plurality of interconnected cavities (20) are formed with a thicker sidewall than the rest of the plurality of sidewalls, along the leading edge (19) and/or the trailing edge (21) of the plurality of interconnected cavities (20) to improve strength in the sealing flange (16).

2. The method of claim 1 further comprising the step of coating the plurality of interconnected cavities (20) with a coating suitable (36) for oxidation arid corrosion resistance and/or improved abradability.

3. The method of claim 1 or 2, wherein the block of material (18) in which the plurality of interconnected cavities (20) are formed is separate from the turbine nozzle (11), and wherein the method further comprises the step of welding or brazing the block of material (18) to the turbine nozzle (11) after the plurality of interconnected cavities (20) have been formed in such block (18).

4. The method of any of claims 1 to 3, wherein the block of material (18) in which the plurality of interconnected cavities (20) are formed is an integral part of the turbine nozzle (11).

5. The method of any of claims 1 to 4, wherein the plurality of interconnected cavities (20) form a honeycomb shape, and wherein each cell (20) of the honeycomb has a length and a width that results in the cell (20) having a diamond shape.

6. The method of any preceding claim, wherein the block of material (18) is formed from an austentic nickel-chromium-based alloy.

7. The method of any preceding claim, wherein the electrode (42) is positive shaped so that the plurality of interconnected cavities (20) can be sunk into the block of material (18), and wherein the plurality of interconnected cavities (20) are sunk into the block of material (18) by the positive electrode (42) burning the shape of the plurality of interconnected cavities (20) into the block of material (18).

8. The method of any preceding claim, wherein the plurality of cavities (20) form a honeycomb shape, and wherein each cell (20) of the honeycomb has a length of between 1.27 and 5.08 mm (0.05 and 0.2 inches), a width of between 1.27 and 2.54 mm (0.05 and 0.1 inches), a depth of about 2.54 and 15.24 mm (0.1 to 0.6 inches), and a wall thickness of about 0.1 and 0.38 mm (0.004 to 0.015 inches).

9. The method of any preceding claim, wherein the electrode (42) has a series of crisscrossing negative grooves (44) which form a positive diamond shaped honeycomb pattern that is burned into the block of material (18) when the electrode (42) is pressed into the block of material (18).

10. The method of claim 7, wherein the sinker electrical discharge machining device (40) includes a press assembly on which the electrode (42) is mounted to press the electrode (42) into the block of material (18) to thereby burn the plurality of interconnected cavities (20) directly into block of material (18).

11. The method of any preceding claim, wherein the plurality of interconnected cavities (20) are formed with side walls thicker in a first direction than in a second direction, to thereby improve sealing between the nozzle sealing flange (16) and a turbine bucket angel wing (14) in the turbine's sealing assembly (10), when the nozzle sealing flange is in the sealing assembly.

12. The method of any preceding claim, wherein the plurality of interconnected cavities (20) are formed with thicker walls in the direction that cooling air flows into the turbine's high temperature combustion gas passage, rather than in the direction a turbine nozzle angel wing (14) in the turbine's sealing assembly (10) rubs the nozzle sealing flange (16), when the nozzle sealing flange (16) is in the sealing assembly (10), to thereby improve sealing between the nozzle sealing flange (16) and the bucket angel wing (14).

13. The method of any preceding claim, wherein the plurality of interconnected cavities (20) are formed in the sealing flange (16) so as to be angled in a predetermined direction, to thereby improve sealing between the nozzle sealing flange (16) and a bucket angel wing (14).

14. The method of any of claims 2 to 13 wherein the coating (30) is an aluminide intermetallic coating.

## Patentansprüche

1. Verfahren zum Herstellen eines Dichtungsflansches (16) einer Turbinendüse (11) mit mehreren abreibbaren Hohlräumen (20), die durch mehrere Seitenwände, die in dem Dichtungsflansch gebildet sind, miteinander verbunden sind, wobei das Verfahren die folgenden Schritte umfasst:
Bereitstellen eines Blocks von Material (18), das geeignet ist, als ein Düsendichtungsflansch (16) zu dienen,
Bereitstellen einer Vorrichtung (40) zum funkenerosiven Senken zur maschinellen Bearbeitung von Merkmalen in dem Block von Material (18),
Bereitstellen einer Elektrode (42) für einen Gebrauch mit der Vorrichtung (40) zum funkenerosiven Senken zur maschinellen Bearbeitung, um die maschinelle Bearbeitung der Merkmale in dem Block (18) von Material durchzuführen, wobei die Elektrode (42) geformt ist, um in dem Block von Material (18) die mehreren miteinander verbundenen Hohlräume zu bilden,
Verwenden der Elektrode (42) mit der Vorrichtung (40) zum funkenerosiven Senken zur maschinellen Bearbeitung, um die Elektrode (42) direkt in den Block von Material (18) einzutauchen, um dadurch den Düsendichtungsflansch (16) mit den mehreren miteinander verbundenen Hohlräumen zu bilden; **dadurch gekennzeichnet, dass** die mehreren miteinander verbundenen Hohlräume (20) mit einer dickeren Seitenwand als der Rest der mehreren Seitenwände entlang der Vorderkante (19) und/oder der Hinterkante (21) der mehreren miteinander verbundenen Hohlräume (20) geformt werden, um die Festigkeit in dem Dichtungsflansch (16) zu verbessern.

2. Verfahren nach Anspruch 1, das ferner den Schritt des Beschichtens der mehreren miteinander verbundenen Hohlräume (20) mit einer Beschichtung umfasst (36), die für eine Oxidations- und Korrosionsbeständigkeit und/oder eine verbesserte Abreibbarkeit geeignet ist.

3. Verfahren nach Anspruch 1 oder 2, wobei der Block von Material (18), in dem die mehreren miteinander verbundenen Hohlräume (20) gebildet werden, von der Turbinendüse (11) getrennt ist, und wobei das Verfahren ferner den Schritt des Schweißens oder Lötens des Blocks von Material (18) an die Turbinendüse (11) umfasst, nachdem die mehreren miteinander verbundenen Hohlräume (20) in solch einem Block (18) gebildet worden sind.

4. Verfahren nach einem der Ansprüche 1 bis 3, wobei der Block von Material (18), in dem die mehreren miteinander verbundenen Hohlräume (20) gebildet werden, ein einstückiges Teil der Turbinendüse (11) ist.

5. Verfahren nach einem der Ansprüche 1 bis 4, wobei die mehreren miteinander verbundenen Hohlräume (20) eine Wabenform bilden, und wobei jede Zelle (20) der Wabe eine Länge und eine Breite aufweist, die zu der Zelle (20) führt, die eine Rautenform aufweist.

6. Verfahren nach einem vorhergehenden Anspruch, wobei der Block von Material (18) aus einer austenitischen Legierung auf der Grundlage von Nickel-Chrom gebildet wird.

7. Verfahren nach einem vorhergehenden Anspruch, wobei die Elektrode (42) positiv geformt ist derart, dass die mehreren miteinander verbundenen Hohlräume (20) in den Block von Material (18) einsinken können, und wobei die mehreren miteinander verbundenen Hohlräume (20) in dem Block von Material (18) versenkt werden, indem die positive Elektrode (42) die Form der mehreren miteinander verbundenen Hohlräume (20) in den Block von Material (18) einbrennt.

8. Verfahren nach einem vorhergehenden Anspruch, wobei die mehreren Hohlräume (20) eine Wabenform bilden, und wobei jede Zelle (20) der Wabe eine Länge zwischen 1,27 und 5,08 mm (0,05 und 0,2 Inch), eine Breite zwischen 1,27 und 2,54 mm (0,05 und 0,1 Inch), eine Tiefe von etwa 2,54 und 15,24 mm (0,1 bis 0,6 Inch) und eine Wanddicke von etwa 0,1 und 0,38 mm (0,004 bis 0,015 Inch) aufweist.

9. Verfahren nach einem vorhergehenden Anspruch, wobei die Elektrode (42) eine Reihe von sich kreuzenden negativen Einschnitten (44) aufweist, die ein positives rautenförmiges Wabenformmuster bilden, das in den Block von Material (18) eingebrannt wird, wenn die Elektrode (42) in den Block von Material (18) gedrückt wird.

10. Verfahren nach Anspruch 7, wobei die Vorrichtung (40) zum funkenerosiven Senken zur maschinellen Bearbeitung eine Pressanordnung enthält, auf der die Elektrode (42) befestigt ist, um die Elektrode (42) in den Block von Material (18) zu drücken, um dadurch die mehreren miteinander verbundenen Hohlräume (20) direkt in den Block von Material (18) einzubrennen.

11. Verfahren nach einem vorhergehenden Anspruch, wobei die mehreren miteinander verbundenen Hohlräume (20) mit Seitenwänden gebildet sind, die in einer ersten Richtung dicker als in einer zweiten Richtung sind, um dadurch die Dichtung zwischen dem Düsendichtungsflansch (16) und einer Dichtungsplatte (14) einer Turbinenschaufel in der Dichtungsanordnung (10) der Turbine zu verbessern, wenn der Düsendichtungsflansch in der Dichtungsanordnung ist.

12. Verfahren nach einem vorhergehenden Anspruch, wobei die mehreren miteinander verbundenen Hohlräume (20) in der Richtung, in der Kühlluft in den Durchgang des Hochtemperaturverbrennungsgases der Turbine strömt, eher mit dickeren Wänden gebildet werden als in der Richtung, in der eine Dichtungsplatte (14) einer Turbinendüse in der Dichtungsanordnung (10) der Turbine den Düsendichtungsflansch (16) abreibt, wenn der Düsendichtungsflansch (16) in der Dichtungsanordnung (10) ist, um dadurch die Dichtung zwischen dem Düsendichtungsflansch (16) und der Dichtungsplatte (14) der Schaufel zu verbessern.

13. Verfahren nach einem vorhergehenden Anspruch, wobei die mehreren miteinander verbundenen Hohlräume (20) in dem Düsendichtungsflansch (16) gebildet sind, um in einer vorgegebenen Richtung winkelig zu sein, um dadurch die Dichtung zwischen dem Düsendichtungsflansch (16) und einer Dichtungsplatte (14) einer Schaufel zu verbessern.

14. Verfahren nach Anspruch 2 bis 13, wobei die Beschichtung (30) eine intermetallische Aluminidbeschichtung ist.

## Revendications

1. Procédé de fabrication d'une bride d'étanchéité (16) de tuyère de turbine (11) avec une pluralité de cavités abradables (20) interconnectées par une série de parois latérales formées dans la bride d'étanchéité, le procédé comprenant les étapes consistant à :
fournir un bloc de matériau (18) convenant pour servir de bride d'étanchéité de tuyère (16),
fournir un dispositif d'usinage par électroérosion (40) pour usiner des caractéristiques dans le bloc de matériau (18),
fournir une électrode (42) pour utilisation avec le dispositif d'usinage par électroérosion (40) pour effectuer l'usinage des caractéristiques dans le bloc de matériau (18), l'électrode (42) étant conformée pour former dans le bloc de matériau (18) la pluralité de cavités interconnectées,
utiliser l'électrode (42) avec le dispositif d'usinage par électroérosion (40) pour plonger l'électrode (42) directement dans le bloc de matériau (18) afin de former de la sorte la bride d'étanchéité de tuyère (16) avec la pluralité de cavités interconnectées ; **caractérisé en ce que** la pluralité de cavités interconnectées (20) sont formées avec une paroi latérale plus épaisse que le reste de la pluralité de parois latérales le long du bord d'attaque (19) et/ou du bord de fuite (21) de la pluralité de cavités interconnectées (20) pour améliorer la résistance dans la bride d'étanchéité (16).

2. Procédé selon la revendication 1, comprenant en outre l'étape de revêtement de la pluralité de cavités interconnectées (20) par un revêtement (36) convenant à la résistance à l'oxydation et à la corrosion et/ou d'une abradabilité améliorée.

3. Procédé selon la revendication 1 ou la revendication 2, dans lequel le bloc de matériau (18) dans lequel sont formées la pluralité de cavités interconnectées (20) est séparé de la tuyère de turbine (11) et dans lequel le procédé comprend en outre l'étape de soudage ou de brasage du bloc de matériau (18) à la tuyère de turbine (11) une fois que la pluralité de cavités interconnectées (20) ont été formées dans ce bloc (18).

4. Procédé selon l'une quelconque des revendications 1 à 3, dans lequel le bloc de matériau (18) dans lequel la pluralité de cavités interconnectées (20) sont formées fait partie intégrante de la tuyère (11) de la turbine.

5. Procédé selon l'une quelconque des revendications 1 à 4, dans lequel la pluralité de cavités interconnectées (20) présentent une forme en nid d'abeille et dans lequel chaque cellule (20) du nid d'abeille a une longueur et une largeur qui font que la cellule (20) a une forme en losange.

6. Procédé selon l'une quelconque des revendications précédentes, dans lequel le bloc de matériau (18) est formé d'un alliage austénitique à base de nickel-chrome.

7. Procédé selon l'une quelconque des revendications précédentes, dans lequel l'électrode (42) a une forme positive de sorte que la pluralité de cavités interconnectées (20) puissent être noyées dans le bloc de matériau (18) et dans lequel la pluralité de cavités interconnectées (20) sont noyées dans le bloc de matériau (18) par l'électrode positive (42) qui grave par combustion la forme de la pluralité de cavités interconnectées (20) dans le bloc de matériau (18).

8. Procédé selon l'une quelconque des revendications précédentes, dans lequel la pluralité de cavités (20) présentent une forme en nid d'abeille et dans lequel chaque cellule (20) du nid d'abeille a une longueur comprise entre 1,27 et 5,08 mm (0,05 et 0,2 pouce), une largeur entre 1,27 et 2,54 mm (0,05 et 0,1 pouce), une profondeur d'environ 2,54 à 15,24 mm (0,1 à 0,6 pouce) et une épaisseur de paroi d'environ 0,1 à 0,38 mm (0,004 à 0,015 pouce).

9. Procédé selon l'une quelconque des revendications précédentes, dans lequel l'électrode (42) présente une série de rainures négatives entrecroisées (44) qui forment un motif de nid d'abeille en forme de losange positif qui est gravé par combustion dans le bloc de matériau (18) lorsque l'électrode (42) est pressée dans le bloc de matériau (18).

10. Procédé selon la revendication 7, dans lequel le dispositif d'usinage par électroérosion (40) comprend un ensemble de presse sur lequel l'électrode (42) est montée pour presser l'électrode (42) dans le bloc de matériau (18) afin de graver par combustion de la sorte la pluralité de cavités interconnectées (20) directement dans le bloc de matériau (18).

11. Procédé selon l'une quelconque des revendications précédentes, dans lequel la pluralité de cavités interconnectées (20) sont formées avec des parois latérales plus épaisses dans un premier sens que dans un second sens, pour ainsi améliorer l'étanchéité entre la bride d'étanchéité de tuyère (16) et une aile d'ange de palette de turbine (14) dans l'ensemble d'étanchéité (10) de la turbine lorsque la bride d'étanchéité de la tuyère se trouve dans l'ensemble d'étanchéité.

12. Procédé selon l'une quelconque des revendications précédentes, dans lequel la pluralité de cavités interconnectées (20) sont formées avec des parois plus épaisses dans le sens où l'air de refroidissement s'écoule dans le passage de gaz de combustion à température élevée de la turbine plutôt que dans le sens où une aile d'ange de tuyère de turbine (14) de l'ensemble d'étanchéité (10) de la turbine frotte sur la bride d'étanchéité (16) de la tuyère lorsque la bride d'étanchéité (16) de la tuyère se trouve dans l'ensemble d'étanchéité (10) afin d'améliorer ainsi l'étanchéité entre la bride d'étanchéité de tuyère (16) et l'aile d'ange (14) de la palette.

13. Procédé selon l'une quelconque des revendications précédentes, dans lequel la pluralité de cavités interconnectées (20) sont formées dans la bride d'étanchéité (16) de manière à faire un angle dans une direction prédéterminée pour ainsi améliorer l'étanchéité entre la bride d'étanchéité de tuyère (16) et une aile d'ange de palette (14).

14. Procédé selon l'une quelconque des revendications 2 à 13, dans lequel le revêtement (30) est un revêtement intermétallique d'aluminure.
